# EUROPÄISCHE PATENTANMELDUNG

(11) **EP 1 278 280 A1**
(43) Veröffentlichungstag der Anmeldung: **22.01.2003**
(21) Anmeldenummer: 01440194.7
(22) Anmeldetag: 27.06.2001
(51) Int. Cl.: H02G 1/08, G02B 6/44

(54) **Spiralartiges gefedertes Kabel**

(71) Anmelder: ALCATEL, 75008 Paris (FR)
(72) Erfinder: Nothofer, Klaus, Dipl.-Ing., 40699 Erkrath (DE); Leppert, Hans-Detlef, Dr. rer. nat., 41189 Mönchengladbach (DE)
(74) Vertreter: Menzietti, Domenico, Dipl.-Ing.

(57) **Zusammenfassung**

Ein Kabel ist zu einer spiralartigen Feder verformt, um erfindungsgemäß federnde Kräfte auszunutzen, die ein solches in eine Versorgungsleitung wie ein Abwasserrohr eingesetztes Kabel gegen die Innenwand des Abwasserrohrs zu drücken. Dies kann vorteilhaft ausgenutzt werden, um ein Kabel in ein nicht begehbares Abwasserrohr zu verlegen.

## Beschreibung

Die Erfindung bezieht sich auf ein Kabel oder Kabelzug zur Verlegung in einem Rohr vorzugsweise einem nichtbegehbaren Abwasserrohr sowie ein Verfahren zur Verlegung solcher Kabel oder Kabelzügen.

Die Nutzung von Abwasser-, Regenwasser-, Mischwasserkanälen oder anderen End- oder Versorgungsleitungen für die Verlegung von Nachrichtenkabeln ist eine bereits genutzte Möglich, die Tiefbaukosten für den Teilnehmeranschluss (access) zu senken. Es ermöglicht zudem Bedarfsorientiert und schnell einen solchen Teilnehmeranschluss auszubauen, was neuerdings durch die Vielzahl von Betreibern zunehmend an Bedeutung bekommt. Im folgenden soll der Begriff Abwasserkanal (Abwasserrohr) auch den Regenwasserkanal, den Mischwasserkanal und End- sowie Versorgungsleitungen umfassen. Bei begehbaren Kanälen werden Standardtechniken zur Verlegung von Nachrichtenkabeln eingesetzt. Weisen die Kanäle einen nichthinreichend großen Mindestdurchmesser zum gefahrlosen Bekriechen, müssen Alternativlösungen gefunden werden. Zunehmend werden bei nichtbegehbaren Kanälen Roboter eingesetzt, um eine dortige Kabelverlegung zu ermöglichen. Doch selbst Roboter benötigen einen Mindestdurchmesser, der nicht immer gewährleistet werden kann. Diese Problematik ist typisch für die sogenannte letzte Meile d.h. die laterale Strecke des Kanals bis zum direkten Anschluss an einem Gebäude. Dabei kann der Durchmesser kleiner als 20 cm sein. Sie sind heutzutage weitestgehend noch unbefriedigend gelöst.

Bei der Verlegung von Kabel in nichtbegehbaren Abwasserkanälen ist zu beachten, dass
- die hydraulisch nutzbare Querschnittfläche nur geringfügig verringert wird,
- möglichst keine Objekte quer zur Fließrichtung verlegt werden müssen,
- keine Angriffspunkte entstehen, die zur Zupfbildung (z.B. Ansammlung von Schwemm-Materialien) und infolge zur Verstopfung führen können, sowie eine Reinigung des Abwasserkanals nicht zu sehr behindern wird.

Der Erfindung liegt die Aufgabe zugrunde, Kabel oder Kabelzug weiterzuentwickeln, die einfach in nichtbegehbaren Kanäle einführbar sind und dauerhaft einen verlegten Zustand bewahren.

Die Aufgabe wird erfindungsgemäß durch ein Kabel oder Kabelzug nach der Lehre des Anspruches 1, ein Verfahren zur Verlegung von einem Kabel oder Kabelzug nach der Lehre des Anspruches 5 sowie ein Herstellungsverfahren von einem Kabel oder Kabelzug nach der Lehre des Anspruches 6 gelöst.

Die Verformung des Kabels oder Kabelzugs in eine spiralartige Feder ermöglicht es Kräfte auszunützen, um dieses Kabel oder Kabelzug gegen die Innenwand des Rohrs zu drücken, in den das Kabel oder der Kabelzug verlegt werden soll. Diese Verformung ist auch relativ einfach zu vollziehen, wobei beachtet werden muss, dass der Durchmesser der spiralartigen Feder gleich oder größer als der Durchmesser des Rohres gewählt wird. Zudem kann das Kabel oder der Kabelzug entsprechend gebildet werden, so dass er einen flachen Querschnitt aufweist, um mit diesem Querschnitt an der Innenwand des Rohres so flach wie möglich zum liegen zu kommen.

Vorteilhafterweise kann das Kabel aus einem Rohrgehäuse, vorzugsweise aus Stahl, hergestellt werden, der sich somit leicht zu einer spiralartigen Feder verformen lässt, und die Möglichkeit gewährt in diesem Rohrgehäuse Telekommunikationskabel, wie z.B. Lichtwellenleiter, einführen zu können.

Vorteilhafte Ausgestaltungen der Erfindung ergeben sich aus den abhängigen Ansprüchen, der nachfolgenden Beschreibung und den Zeichnungen.

Ein Ausführungsbeispiel der Erfindung wird nun unter Zuhilfenahme der Fig. 1 bis 4 erläutert.

Es zeigen:
- Fig. 1: ein Rohr z.B. Abwasserrohr,
- Fig. 2: eine Vorrichtung zur Formgebung eines erfindungsgemäßen Kabels oder Kabelzugs sowie eine Detailansicht des Querschnitts von letzterem,
- Fig. 3: eine Skizze der Verlegung eines Kabel oder Kabelzuges nach Fig. 2 in ein Rohr nach Fig. 1,
- Fig. 4: ein Rohr nach Fig. 1 mit dem erfindungsgemäßen verlegten Kabel oder Kabelzug nach Fig. 2.

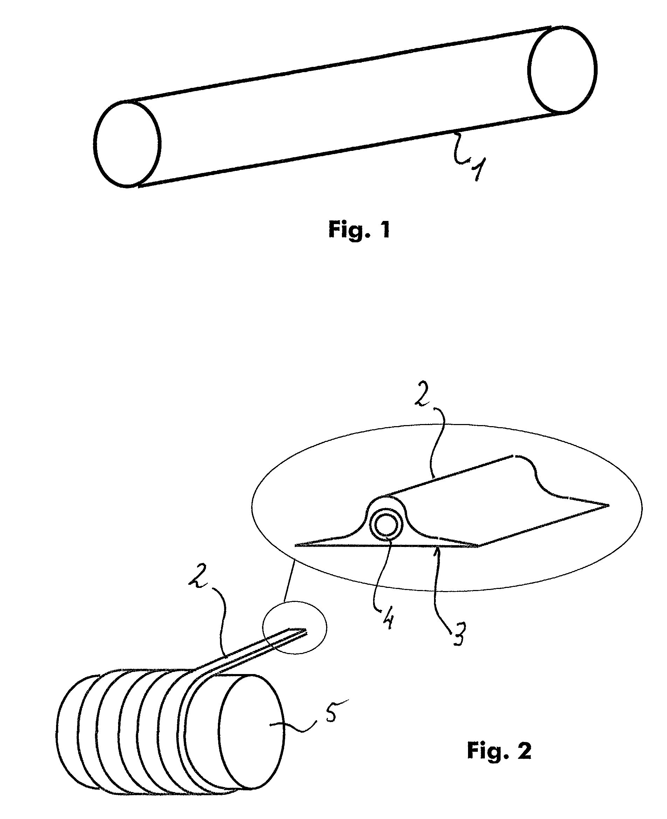

In Fig. 1 ist ein Rohr 1 z.B. Abwasserrohr oder Abwasserkanal gezeichnet, das einen bestimmten Querschnitt aufweist. Dieses Rohr 1 kann z.B. die laterale Strecke sein, die die letzte Meile zum Teilnehmeranschluss bildet.

In Fig. 2 ist ein Zylinder 5 beziehungsweise Fasswickler gezeigt, um den ein erfindungsgemäßes Kabel oder Kabelzug 2 gewickelt ist. Zudem ist in einer Detailansicht der Querschnitt dieses Kabels 2 gezeichnet. Dabei weist das Kabel 2 eine flache Seite 3 auf, was ihm einen abgeflachten Querschnitt gibt, und umgibt ein Rohrgehäuse 4. Vorzugsweise ist dieses Rohrgehäuse 4 aus Stahl gebildet. Somit kann bei einer Formgebung des Kabels oder Kabelzugs 2 zu einer spiralartigen Feder 6 eine gewisse Steifheit sowie gegebenenfalls eine Federkraft erzielt werden. Die Formgebung kann durch Wickeln um den Zylinder 5 des Kabels oder Kabelzugs 2 gewonnen werden. Hierfür muss gegebenenfalls die Wicklung des Kabel oder Kabelzugs 2, um den Zylinder 5 für eine gewisse Zeit beibehalten werden. Der Durchmesser dieses Zylinders 5 sowie die Zeit, bei der die Wicklung beibehalten werden soll, ist direkt abhängig von den gewählten Materialienstärken des Kabels oder Kabelzugs 2 besonders des Rohrgehäuses 4 sowie des Durchmessers der Innenwand des Rohrs 1 in dem dieses Kabel oder Kabelzug 2 verlegt werden soll. Wichtig ist dabei, dass die durch Wicklung gewonnene Federkraft hinreichend stark ist, um das Kabel oder den Kabelzug 2 gegen die Innenwand des Rohres 1 im verlegten Zustand dauerhaft zu drücken.

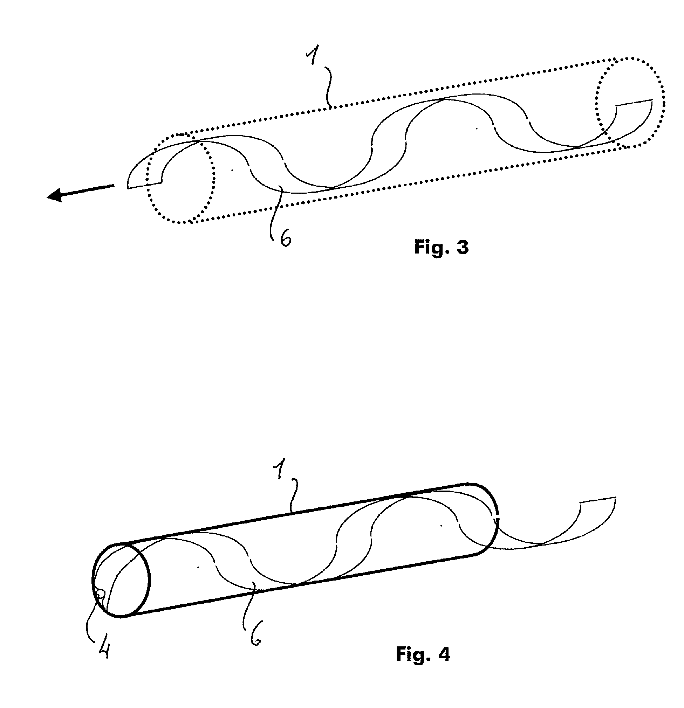

In Fig. 3 ist schematisch gezeigt wie ein erfindungsgemäßes Kabel oder Kabelzug 2 in Form einer Feder 6 in das nichtbegehbare Rohr eingeführt wird. Dabei wird die Feder zu einem Durchmesser kleiner als der Durchmesser der Innenwand des Rohres 1 straffgehalten bis die Verlegung vollzogen ist. Dann wird sie entspannt, was dazu führt, dass das als Feder gebildete Kabel 6 nut der flachen Seite 3 sich gegen die Innenwand des Rohrs 1 anliegt. Dieser Endzustand ist in Fig. 4 gezeichnet. Dabei ist das Rohrgehäuse 4 deutlich zu erkennen. In einem solchen Rohrgehäuse können typischer Weise Telekommunikationskabel wie Lichtwellenleiter eingesetzt werden, die gegebenenfalls in einer Füllmasse wie Gel umbettet werden können.

Die Gewindesteigung der Feder 6 im verlegten Zustand in dem Rohr 1 einmal entspannt, wie in Fig. 4 gezeigt, kann Vorteilhafterweise das 1- bis 10-fache des Durchmessers des Rohres 1 entsprechen. Dies ist direkt abhängig von der gewünschten Steifheit sowie gegebenenfalls von der Federkraft der gewonnenen spiralartigen Feder 6. Als Rohrgehäuse 4 bei solchen Kabeln 2 können übliche Stahlgehäuse angewendet werden, wie sie bei. den optischen Erdleitern (- optical ground wire, OGW -) verwendet werden.

## Patentansprüche

1. Kabel oder Kabelzug (2) zur Verlegung in einem Rohr (1) vorzugsweise einem nicht begehbaren Abwasserrohr, **dadurch gekennzeichnet, dass** das Kabel oder Kabelzug (2) aus einer spiralartigen Feder (6) gebildet ist, die einen Durchmesser gleich oder größer als der Durchmesser des Rohrs (1) und eine Steifheit sowie gegebenenfalls eine Federkraft hinreichend stark aufweist, um gegen die Innenwand des Rohrs (1) im installierten Zustand gedrückt zu sein.

2. Kabel oder Kabelzug (2) nach Anspruch 1, **dadurch gekennzeichnet, dass** er einen flachen Querschnitt (3) aufweist.

3. Kabel oder Kabelzug (2) nach Anspruch 1, **dadurch gekennzeichnet, dass** er ein Rohrgehäuse (4) vorzugsweise aus Stahl sowie gegebenenfalls darin eingeführte Telekommunikationskabeln aufweist.

4. Kabel oder Kabelzug (2) nach Anspruch 3, **dadurch gekennzeichnet, dass** im Rohrgehäuse (4) Lichtwellenleitern gegebenenfalls mit Füllmasse eingesetzt sind.

5. Verfahren zur Verlegung von einem Kabel oder Kabelzug (2) in einem Rohr (1) vorzugsweise in einem nicht begehbaren Abwasserrohr, **da** **durch gekennzeichnet, dass** das Kabel oder Kabelzug (2) nach Anspruch 1 gebildet ist, und die Feder (6) bei der Verlegung zu einem Durchmesser kleiner als der Durchmesser der Innenwand des Rohrs (1) straff gehalten wird, wobei im verlegten Zustand sie entspannt wird.

6. Herstellungsverfahren von einem Kabel oder Kabelzug (2) zur Verlegung in einem Rohr (1) vorzugsweise in einem nicht begehbaren Abwasserrohr, **dadurch gekennzeichnet, dass** er zu einer spiralartigen Feder (6) geformt wird.

7. Herstellungsverfahren nach Anspruch 6, **dadurch gekennzeichnet, dass** die Formgebung zu der spiralartigen Feder (6) gewonnen wird, in dem das Kabel oder Kabelzug (2) um einen Zylinder (5) umgewickelt wird, wobei letztere einen Durchmesser aufweist, der entsprechend gewählt wird, um das Kabel oder Kabelzug (2) eine hinreichende Steifheit sowie gegebenenfalls Federkraft zu verleihen, die gewährleisten wird, dass das Kabel oder Kabelzug (2) im verlegten Zustand an der Innenwand des Rohrs (1) liegen wird.
